# EUROPEAN PATENT SPECIFICATION

(11) **EP 2 216 521 B1**
(45) Date of publication and mention of the grant of the patent: **13.07.2016**
(21) Application number: 10153091.3
(22) Date of filing: 09.02.2010
(51) Int. Cl.: F01N 3/023, F01N 9/00, F01N 11/00

(54) **Internal combustion engine exhaust gas control apparatus**
Abgasregelungsvorrichtung für einen Verbrennungsmotor
Appareil de contrôle des gaz d'échappement d'un moteur à combustion interne

(30) Priority: 09.02.2009 JP 2009027311
(43) Date of publication of application: 11.08.2010
(73) Proprietor: TOYOTA JIDOSHA KABUSHIKI KAISHA, Toyota-shi, Aichi-ken, 471-8571 (JP)
(72) Inventor: Tojo, Isamu, Toyota-shi, Aichi-ken 471-8571 (JP)
(74) Representative: Intès, Didier Gérard André

(56) References cited:
- EP-A1- 1 541 829
- EP-A1- 1 602 806
- EP-A2- 1 624 172
- FR-A1- 2 799 504
- US-A1- 2003 230 077

## Description

### BACKGROUND OF THE INVENTION

### 1. Field of the Invention

The invention relates to an exhaust gas control apparatus that purifies exhaust gas from an internal combustion engine (hereinafter also simply referred to as "engine"). More particularly, the invention relates to an internal combustion engine exhaust gas control apparatus that purifies exhaust gas from a diesel engine using a particulate filter.

### 2. Description of the Related Art

Exhaust gas that is discharged when driving an internal combustion engine such as a petrol engine or a diesel engine contains matter that is not desirable to discharge into the atmosphere as it is. In particular, exhaust gas from a diesel engine contains particulate matter (hereinafter also simply referred to as "PM") of which carbon is the main component, soot, and soluble organic fraction (SOF), and the like, all of which cause air pollution.

One known apparatus that purifies PM in exhaust gas is an exhaust gas control apparatus that reduces the amount of emissions discharged into the atmosphere by providing a particulate filter in an exhaust passage of a diesel engine and trapping PM in exhaust gas that passes through the exhaust passage. DPFs (Diesel Particulate Filters) and DPNR (Diesel Particulate-NOx Reduction system) catalysts, for example, are used as particulate filters.

When trapping PM using a particulate filter (hereinafter also simply referred to as "filter"), the filter will become clogged when a large amount of trapped PM has accumulated. When this happens, pressure loss of the exhaust gas that passes through the filter increases, which causes the exhaust gas back pressure in the engine to increase. As a result, engine output and fuel efficiency both decrease.

To solve this problem, when the trapped amount (i.e., accumulated amount) of PM that has been trapped by the filter reaches a predetermined amount, the filter is regenerated by oxidising (burning off) the PM on the filter by increasing the catalyst bed temperature. More specifically, the filter is regenerated, for example, by increasing the temperature (i.e., the exhaust gas temperature) of an oxidation catalyst (CCO) upstream of the filter (i.e., on the upstream side of the exhaust gas flow) by additionally injecting a small amount of fuel (in a post injection) after a main fuel injection (a main injection), and then oxidising (burning off) the PM that has accumulated on the filter by executing a filter regenerating post injection (see Japanese Patent Application Publication No. 2008-202573 (JP-A-2008-202573), for example).

With this kind of filter regeneration control (hereinafter also referred to as "filter regeneration"), the amount of PM accumulated on the filter is estimated, and when that estimated PM accumulated amount reaches a predetermined value, it is determined that it is time to regenerate the filter and filter regeneration is executed (see Japanese Patent Application Publication No. 2008-202573 (JP-A-2008-202573) and JP-A-2004-218508 (JP-A-2004-218508), for example).

One way to estimate the PM accumulated amount is to provide a differential pressure sensor that detects the differential pressure between the pressure upstream of the filter and the pressure downstream of the filter (i.e., the differential pressure of the pressures in front and in back of the filter), and estimating the PM accumulated amount from the output signal of that differential pressure sensor (this estimation process will be referred to as the process for estimating the PM amount based on the differential pressure) (see JP-A-2004-218508, for example). Another way to estimate the PM accumulated amount is to estimate it referring to a map or the like based on the engine operating state (such as the engine speed, the fuel injection quantity, the exhaust gas temperature and the like) (this estimation process will be referred to as the process for estimating the PM amount based on the engine operating state) (see JP-A-2008-202573, for example).

When the estimated PM accumulated amount estimated by one of these two estimation processes reaches a start-regeneration determining value (which is a value that corresponds to a limit accumulation amount), filter regeneration control starts. For example, control is performed that ends filter regeneration when the PM accumulated amount estimated based on the engine operating state falls to an end-regeneration determining value. Incidentally, the reason for performing the two estimation processes, i.e., the process for estimating the PM amount based on the engine operating state and the process for estimating the PM amount based on the differential pressure, is to increase the reliability of the determination to start filter regeneration.

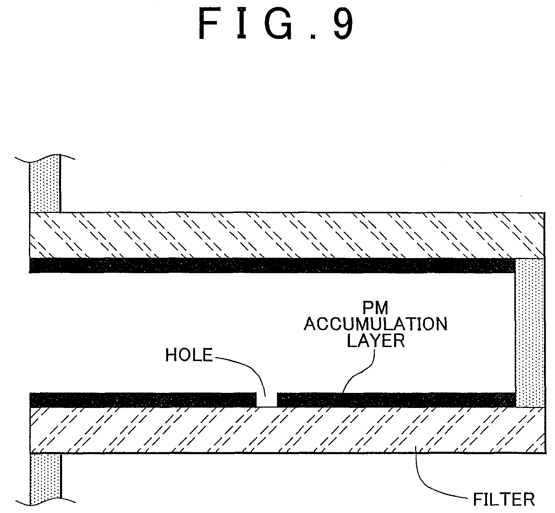

Incidentally, the problem with process for estimating the PM amount based on the differential pressure is that the accuracy during filter regeneration is low and the estimated PM accumulated amount is a lower value than the actual PM accumulated amount. The reason for this is that when filter regeneration starts, the PM accumulated on the filter is not burned off evenly over the entire filter (because the temperature distribution inside the filter is not even). As a result, PM accumulated on the filter is partially removed, so PM is combusted in such as way that a hole forms in part of the PM accumulation layer. When a hole forms in the PM accumulation layer (see FIG. 9, for example), the differential pressure of the pressures in front and in back of the filter abruptly decreases, which causes the PM accumulated amount that is estimated based on the differential pressure to become a lower value than the actual PM accumulated amount. Therefore, the estimated PM accumulated amount ends up falling equal to or below the end-regeneration determining value before the actual PM accumulated amount reaches the end-regeneration determining value, so filter regeneration ends even though there is still PM in the filter.

In such a condition, the period (interval) until the PM accumulated amount estimated based on the differential pressure reaches the start-regeneration determining value becomes shorter, such that filter regeneration is executed more frequently which may reduce fuel efficiency. Also, if filter regeneration is executed more frequently and that filter regeneration is performed with a post injection, oil dilution (i.e., fuel mixed in with the engine oil) from that post injection will increase. If oil dilution increases, the oil film at the sliding portions of the engine may shear or the level of the engine oil may rise (causing the oil to run over).

One way to solve these problems is simply to not select the process for estimating the PM amount based on the differential pressure during filter regeneration. However, when there is a filter regeneration command, the process for estimating the PM amount based on the differential pressure may be selected. That is, if a PM combustion condition ceases to be satisfied due to, for example, the catalyst temperature not being high enough even if there is a filter regeneration command, the combustion mode will switch from the regeneration combustion mode to the normal combustion mode. If the combustion mode switches to the normal combustion mode, the process for estimating the PM amount based on the differential pressure may be selected. If the process for estimating the PM amount based on the differential pressure is selected when there is such a filter regeneration command, the problems described below may arise.

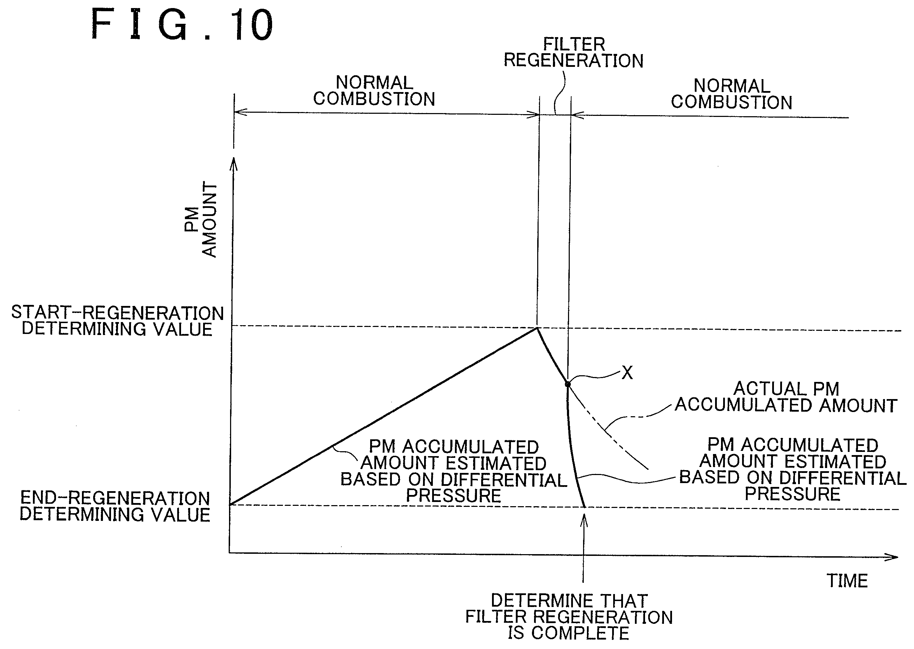

First, as described above, with the process for estimating the PM amount based on the differential pressure, the differential pressure of the pressures in front and in back of the filter (i.e., the estimated PM accumulated amount) will abruptly decrease when a hole forms in part of the PM accumulation layer from the filter regeneration. Here, as shown in FIG. 10, for example, when the combustion mode switches to the normal combustion mode during filter regeneration (at point X) such that a selection can be made between the process for estimating the PM amount based on the engine operating state and the process for estimating the PM amount based on the differential pressure, the PM accumulated amount based on the differential pressure abruptly decreases, while the PM accumulated amount estimated based on the engine operating state rises when the combustion mode is the normal combustion mode. Therefore, the filter ends up being in a filter regeneration complete state (a filter regeneration complete state as far as the control is concerned) when the PM accumulated amount based on the differential pressure decreases to the end-regeneration determining value. That is, it is determined that filter regeneration has been completed and filter regeneration ends even though there is still a large amount of PM remaining on the filter. When the combustion mode is the normal combustion mode after it has been determined that regeneration has been completed in filter control, the differential pressure of the pressures in front and in back of the filter abruptly rises when the hole is blocked by the accumulation of PM in the hole of the PM accumulation layer described above. As a result, the estimated PM accumulated amount quickly reaches the start-regeneration determining value, so filter regeneration starts.

In this way, when the combustion mode switches to the normal combustion mode during filter regeneration (when there is a filter regeneration command) such that there is a possibility that the process for estimating the PM amount based on the differential pressure will be selected, the interval during which filter regeneration is executed becomes shorter, which reduces fuel efficiency. Also, if the frequency with which filter regeneration is executed increases and that filter regeneration is performed by a post injection, oil dilution (i.e., fuel mixed in with the engine oil) from that post injection will increase. Further, the combustion mode frequently switches to the normal combustion mode during filter regeneration when the vehicle continues to travel at a low speed, for example, so in this case, the frequency of filter regeneration increases so fuel efficiency decreases even more.

The European patent application No. EP1602806A1 , as well as US Patent Application No. US2003/0230077A1, disclose an exhaust gas control apparatus of an internal combustion engine according to the preamble of claim 1.

### SUMMARY OF THE INVENTION

The invention therefore provides an exhaust gas control apparatus capable of executing filter regeneration by oxidising and removing PM (particulate matter) that has accumulated on a particulate filter, and accurately determining when filter regeneration is complete.

A first aspect of the invention presumes and relates to an exhaust gas control apparatus of an internal combustion engine, that is provided with a filter that is arranged in an exhaust passage of an internal combustion engine and traps particulate matter in exhaust gas, and filter regeneration controlling means for estimating an accumulated amount of particulate matter accumulated on the filter, starting filter regeneration to remove the particulate matter accumulated on the filter in response to a filter regeneration command when the estimated accumulated amount of particulate matter reaches a start-regeneration determining value, and ending the filter regeneration when the estimated accumulated amount of particulate matter decreases to an end-regeneration determining value. The filter regeneration controlling means is configured to determine that a period of time from after there is filter regeneration command and the filter regeneration starts until the filter regeneration has been completed, and which is a period of time during which the filter regeneration is not prohibited, is a period of time during which the filter is in a filter regeneration incomplete state.

In this first aspect, when filter regeneration is not prohibited and the filter is not in the filter regeneration incomplete state, the filter regeneration controlling means is able to select an estimation process for estimating the accumulated amount of particulate matter based on the engine operating state or an estimation process for estimating the accumulated amount of particulate matter based on a differential pressure of pressures in front and in back of the filter. The filter regeneration controlling means is configured to estimate the accumulated amount of particulate matter accumulated on the filter based on the engine operating state and to prevent an estimation of such accumulated amount based on a differential pressure in front and in back of the filter while the filter is in the filter regeneration incomplete state.

According to this aspect, the accumulated amount of particulate matter accumulated on the filter is estimated based on the engine operating state, and the estimation process for estimating the PM accumulated amount based on the differential pressure of the pressures in front and in back of the filter is prevented from being selected while the filter is in the filter regeneration incomplete state, i.e., during a period of time from after there is filter regeneration command and the filter regeneration starts until the filter regeneration has been completed, and which is a period of time during which the filter regeneration is not prohibited.

According to this aspect, after filter regeneration starts in response to a filter regeneration command, the PM accumulated amount is estimated based on the engine operating state even if the combustion mode switches to the normal combustion mode during that filter regeneration. Accordingly, the relationship between the estimated PM accumulated amount and the actual PM accumulated amount will not become skewed, thus making it is possible to accurately determine when filter regeneration has been completed. As a result, it is possible to suppress an increase in the frequency with which filter regeneration is executed, and thus suppress a reduction in fuel efficiency. Also, when filter regeneration is performed by a post injection, oil dilution from that post injection can be suppressed.

When filter regeneration is executed by a post injection, the oil becomes increasingly diluted by the fuel from the post injection, so a limit is placed on the maximum duration of filter regeneration. Thus, the period of time during which the filter regeneration is not prohibited refers to a period of time during which a process for prohibiting the filter regeneration during a period of time until the fuel that is mixed in with the oil sufficiently vaporises, even if there is a filter regeneration command, after that maximum duration (i.e., the duration of the post injection at which the amount of fuel diluting the oil reaches the allowable limit) is reached, is not being performed. In this filter regeneration prohibited state, the engine is in the normal combustion mode, PM newly accumulates on the filter, and the fuel that is mixed in with the engine oil vaporises (the oil recovers from being diluted), so the estimation process for estimating the PM accumulated amount based on the differential pressure is able to be selected.

In the structure described above, when there is no command to regenerate the filter, the filter regeneration controlling means is able to select an estimation process for estimating the accumulated amount of particulate matter based on the engine operating state or an estimation process for estimating the accumulated amount of particulate matter based on a differential pressure of pressures in front and in back of the filter. Also, a filter regeneration command may be generated and filter regeneration may be started when one of the estimated PM accumulated amounts, from among the two estimated PM accumulated amounts estimated by these estimation processes, reaches a start-regeneration determining value.

According to this structure, in an exhaust gas control apparatus that executes filter regeneration to oxidise and remove particulate matter (PM) accumulated on a filter, the filter regeneration is able to be ended at the appropriate timing, which makes it possible to suppress an increase in the frequency with which filter regeneration is executed, thus making it possible to suppress a reduction in fuel efficiency.

In the structure described above, a determination that the filter is in the filter regeneration incomplete state may be made when any one or more conditions, from among i) a condition that the number of times that the filter regeneration has been completed be greater than a predetermined determining number, ii) a condition the flowrate of exhaust gas that flows through the filter be greater than a predetermined flowrate, iii) a condition that there be no malfunction in the exhaust gas control apparatus, iv) a condition that an amount of change in the differential pressure of the pressures in front and in back of the filter be equal to or less than a predetermined amount, v) a condition that the exhaust gas control apparatus not be executing NO₂ reduction control, and vi) a condition that filter regeneration to remove particulate matter accumulated on the filter not be being executed, are satisfied.

In the structure described above, a determination that the filter is in the filter regeneration incomplete state may be made when any one or more conditions, from among i) a condition that the number of times that the filter regeneration has been completed be equal to or less than a predetermined determining number, ii) a condition the flowrate of exhaust gas that flows through the filter be equal to or less than a predetermined flowrate, iii) a condition that there be a malfunction in the exhaust gas control apparatus, iv) a condition that an amount of change in the differential pressure of the pressures in front and in back of the filter be greater than a predetermined amount, v) a condition that the exhaust gas control apparatus be executing NO₂ reduction control, and vi) a condition that filter regeneration to remove particulate matter (PM) accumulated on the filter be being executed, have not continued to be satisfied for a predetermined period of time or longer.

In the structure described above, the filter regeneration controlling means may estimate the accumulated amount of particulate matter accumulated on the filter based on the engine operating state when any one or more conditions, from among i) a condition that the number of times that the filter regeneration has been completed be equal to or less than a predetermined determining number, ii) a condition the flowrate of exhaust gas that flows through the filter be equal to or less than a predetermined flowrate, iii) a condition that there be a malfunction in the exhaust gas control apparatus, iv) a condition that an amount of change in the differential pressure of the pressures in front and in back of the filter be greater than a predetermined amount, v) a condition that the exhaust gas control apparatus be executing NO₂ reduction control, and vi) a condition that filter regeneration to remove particulate matter accumulated on the filter be being executed, have continued to be satisfied for a predetermined period of time or longer.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a block diagram schematically showing an example of a diesel engine to which the invention is applied;
FIG. 2 is a block diagram of the structure of a control system including an ECU and the like;
FIG. 3 is a view of a map for obtaining a PM generated amount pme;
FIG. 4 is a view of a map for obtaining a PM combusted amount pmc;
FIG. 5 is a timing chart showing a change in an estimated PM accumulated amount PMs that is estimated based on the engine operating state, and a change in an estimated PM accumulated amount PMd that is estimated based on differential pressure;
FIG. 6 is a flowchart illustrating a routine for determining a filter regeneration incomplete state;
FIG. 7A and 7B are timing charts showing the period of the filter regeneration incomplete state;
FIG. 8A and FIG. 8B are a flowchart illustrating a control routine for selecting the process for estimating the PM amount;
FIG. 9 is a longitudinal sectional view showing a frame format of a main portion where a hole has formed in a PM accumulation layer during filter regeneration; and
FIG. 10 is a chart illustrating a problem that occurs when the combustion mode switches to the normal combustion mode during filter regeneration.

### DETAILED DESCRIPTION OF AN EMBODIMENT

An example embodiment of the present invention will be described in greater detail below with reference to the accompanying drawings.

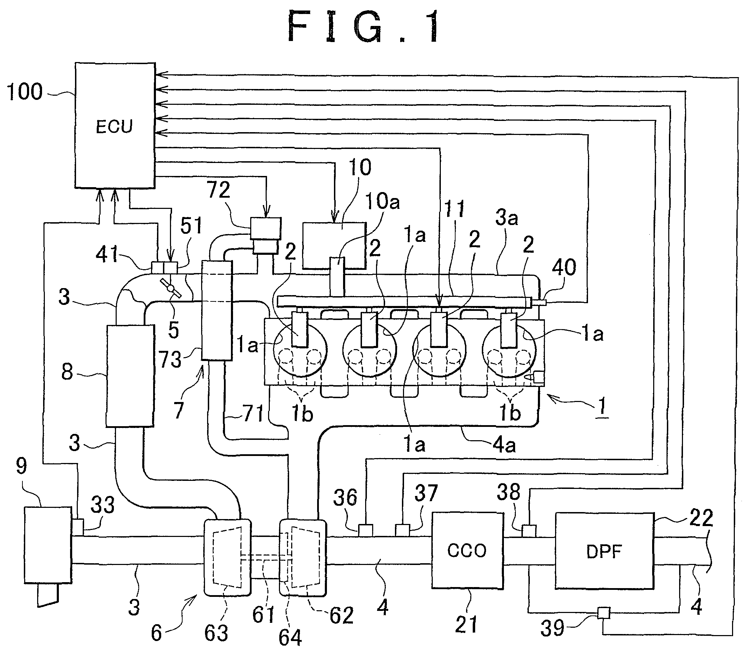

The general structure of a diesel engine to which the invention is applied will now be described with reference to FIG. 1.

A diesel engine 1 (hereinafter simply referred to as "engine 1") according to this example embodiment is a common rail in-cylinder direct injection four cylinder engine, for example, in which an injector (i.e., a fuel injection valve) 2 is arranged in a combustion chamber 1a of each cylinder of the engine 1, and injects fuel for combustion in the combustion chamber 1a. The injector 2 of each cylinder is connected to a common rail 11, which is in turn connected to a supply pump 10.

The supply pump 10 draws up fuel from a fuel tank and pressurises it before supplying it to the common rail 11 via a fuel line 10a. The common rail 11 functions as an accumulator that maintains (accumulates) the pressurised fuel supplied from the supply pump 10 at a predetermined pressure, and distributes this accumulated fuel to the injectors 2. Each injector 2 is an electromagnetically driven on-off valve that opens to inject (i.e., supply) fuel into the combustion chamber 1a when a predetermined voltage is applied. The opening and closing (i.e., the fuel injection quantity and the fuel injection timing) of the injectors 2 is duty-controlled by an ECU (Electronic Control Unit) 100.

An intake passage 3 and an exhaust passage 4 are connected to the engine 1. An air cleaner 9, an airflow meter 33, a compressor impeller 63 of a turbocharger 6 that will be described later, an intercooler 8, and a throttle valve 5 are arranged, in order from upstream (i.e., the portion on the upstream side of the intake air flow) to downstream in the intake passage 3. The throttle opening amount of the throttle valve 5 is adjusted by a throttle motor 51. The throttle opening amount of the throttle valve 5 is detected by a throttle opening amount sensor 41. Incidentally, the intake passage 3 branches off to each cylinder at an intake manifold 3a that is arranged downstream of the throttle valve 5.

The exhaust passage 4 is formed such that branches leading from the individual cylinders are all brought together by an exhaust manifold 4a that is connected to the combustion chamber 1a of each cylinder of the engine 1.

A CCO (an oxidation catalytic converter) 21 that purifies HC (hydrocarbons) and CO (carbon monoxide) in the exhaust gas by purifying them, and a DPF 22 that traps PM (particulate matter) are arranged in order in the exhaust passage 4. Exhaust gas generated from combustion in the combustion cylinders 1a is sent into the exhaust passage 4.

An A/F sensor 36 and a first exhaust gas temperature sensor 37 are arranged in the exhaust passage 4 upstream (on the upstream side of the exhaust gas flow) of the CCO 21. The temperature of the exhaust gas that enters the CCO 21 can be detected from the output signal of the first exhaust gas temperature sensor 37. Also, a second exhaust gas temperature sensor 38 is arranged in the exhaust passage 4 between the CCO 21 and the DPF 22. The temperature of the exhaust gas that enters the DPF 22 (i.e., the filter temperature (bed temperature)) can be detected from the output signal of the second exhaust gas temperature sensor 38. Moreover, a differential pressure sensor 39 that detects the differential pressure between the pressure upstream of the DPF 22 and the pressure downstream of the DPF 22 is also provided.

The output signals from the A/F sensor 36, the first exhaust gas temperature sensor 37, the second exhaust gas temperature sensor 38, and the differential pressure sensor 39 are input to the ECU 100.

The engine 1 is provided with a turbocharger 6. This turbocharger 6 includes a turbine wheel 62 and a compressor impeller 63 that are coupled together via a rotor shaft 61.

The compressor impeller 63 is arranged facing the inside of the intake passage 3, and the turbine wheel 62 is arranged facing the inside of the exhaust passage 4. This kind of turbocharger 6 supercharges the intake air by using the exhaust flow (i.e., exhaust pressure) on the turbine wheel 62 to rotate the compressor impeller 63. The turbocharger 6 in this example embodiment is a variable nozzle turbocharger, in which a variable nozzle vane mechanism 64 is provided on the turbine wheel 62 side, and the boost pressure of the engine 1 can be adjusted by adjusting the opening amount of this variable nozzle vane mechanism 64. Incidentally, the intake air that has been heated by the supercharging in the turbocharger 6 is forcibly cooled by the intercooler 8 arranged in the intake passage 3.

The engine 1 is also provided with an EGR system 7. This EGR system 7 is a system that circulates some of the exhaust gas that flows through the exhaust passage 4 to the intake passage 3 and lowers the combustion temperature by supplying that recirculated exhaust gas into the combustion chambers 1a of the cylinders, thereby reducing the amount of NOx that is generated. The EGR system 7 includes an EGR passage 71 that connects the intake manifold 3a with the exhaust manifold 4a. An EGR cooler 73 for cooling the EGR gas that flows (is circulated) through the EGR passage 71, and an EGR valve 72 are provided, in order from the upstream side of the EGR gas flow, in the EGR passage 71. The amount of EGR gas (i.e., the amount of recirculated exhaust gas) introduced into the intake passage 3 (i.e., the intake manifold 3a) from the exhaust passage 4 (i.e., the exhaust manifold 4a) can be adjusted by adjusting the opening amount of this EGR valve 72.

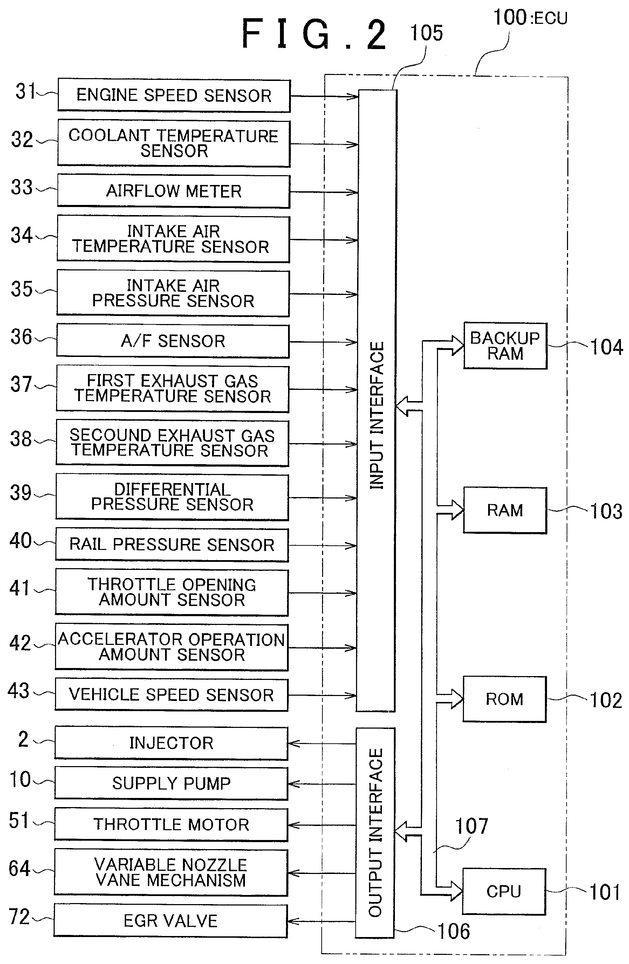

The ECU 100 includes a CPU 101, ROM 102, RAM 103, and backup RAM 104 and the like, as shown in FIG. 2.

Various control programmes and maps that are referenced when executing those various control programmes and the like are stored in the ROM 102. The CPU 101 performs calculations based on the various control programmes and maps stored in the ROM 102. Also, the RAM 103 is memory that temporarily stores the calculation results of the CPU 101 and data and the like that has been input from various sensors, and the backup RAM 104 is non-volatile memory that stores data and the like that is to be saved when the engine 1 is stopped.

The CPU 101, the ROM 102, the RAM 103, and the backup RAM 104 are all connected together, as well as to an input interface 105 and an output interface 106, via a bus 107.

Various sensors are connected to the input interface 105. Some of these sensors include an engine speed sensor 31 that detects the rotation speed of a crankshaft that is an output shaft of the engine 1, a coolant temperature sensor 32 that detects the coolant temperature of the engine (i.e., the coolant temperature), the airflow meter 33, an intake air temperature sensor 34 that is arranged in the intake manifold 3a and detects the temperature of intake air, an intake air pressure sensor 35 that is arranged in the intake manifold 3a and detects the pressure of intake air, the A/F sensor 36, the first exhaust gas temperature sensor 37, the second exhaust gas temperature sensor 38, the differential pressure sensor 39, a rail pressure sensor 40 that detects the pressure of pressurised fuel in the common rail 11, a throttle opening amount sensor 41, an accelerator operation amount sensor 42, and a vehicle speed sensor 43. Signals from these sensors are input to the ECU 100.

The injectors 2, the supply pump 10, the throttle motor 51 of the throttle valve 5, the variable nozzle vane mechanism 64 of the turbocharger 6, and the EGR valve 72 and the like are connected to the output interface 106.

The ECU 100 executes various controls of the engine 1, including opening amount control of the throttle valve 5, and fuel injection quantity and injection timing control (i.e., opening / closing control of the injectors 2) of the engine 1, based on the output signals from the various sensors described above. Furthermore, the ECU 100 executes NO₂ reduction control, DPF regeneration control, a routine for determining the filter regeneration incomplete state, and control for selecting a process for estimating the PM amount.

Incidentally, the ECU 100 also performs a malfunction diagnosis (i.e., a diagnosis) of the exhaust devices (such as the A/F sensor 36 and the differential pressure sensor 39).

Control of the exhaust gas control apparatus of the invention may also be realised by a programme executed by the ECU 100 described above.

First, in the diesel engine, the air-fuel ratio in most of the operating region is a lean air-fuel ratio, so during normal operation, the atmosphere around the CCO 21 has a high concentration of oxygen and the NO₂ (NOx) in the exhaust gas is absorbed by the CCO 21. However, the catalyst deteriorates from the thermal load and sulfur poisoning (S poisoning) and when the NO₂ reduction performance declines, it is necessary to reduce the NO₂ and recover the CCO 21.

Therefore, in this example embodiment, the ECU 100 executes NO₂ reduction control. More specifically, when the NO₂ storage amount estimated based on the engine operating state or the like reaches a predetermined limit value, the air-fuel ratio (A/F) of the exhaust gas is controlled by executing a post injection to supply fuel into the exhaust passage 4 upstream of the CCO 21. As a result, the temperature around the CCO 21 increases and a reduction atmosphere is created around the CCO 21 such that the NO₂ stored in the CCO 21 is reduced and released.

Incidentally, the PM regeneration control, which will be described later, and the NO₂ reduction control are performed when there is a command to do so, but when the execution of these controls overlap, the PM regeneration control will be executed first and then the NO₂ reduction control will be executed, for example.

The ECU 100 estimates the amount of accumulated PM by the two processes (1) and (2) below.

### (1) Process for estimating the PM amount based on the engine operating state

In this example, an estimated amount of accumulated PM (also simply referred to as the "estimated PM accumulated amount") PMs is calculated using the amount of generated PM (also simply referred to as the "PM generated amount") pme and the amount of combusted PM (also simply referred to as the "PM combusted amount) pmc.

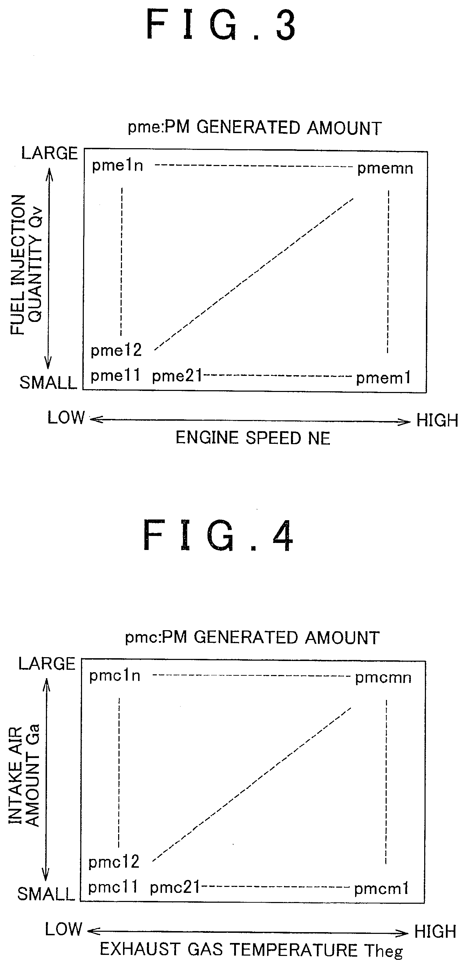

The PM generated amount pme is the amount of PM that is discharged from all of the combustion chambers of the engine per unit of time (for example, during one control cycle of the estimating process). This PM generated amount pme is obtained referencing the map in FIG. 3 based on the engine speed NE obtained from the output signal from the engine speed sensor 31, and the fuel injection quantity Qv (a command value).

The PM combusted amount pmc is the amount of PM accumulated on the DPF 22 that is oxidised and combusted per unit of time (for example, during one control cycle of the estimating process). This PM combusted amount pmc is obtained referencing the map in FIG. 4 (a PM oxidation rate map) based on the exhaust gas temperature Theg (which corresponds to the filter temperature) obtained from the output signal of the second exhaust gas temperature sensor 38, and the intake air amount Ga obtained from the output signal of the airflow meter 33.

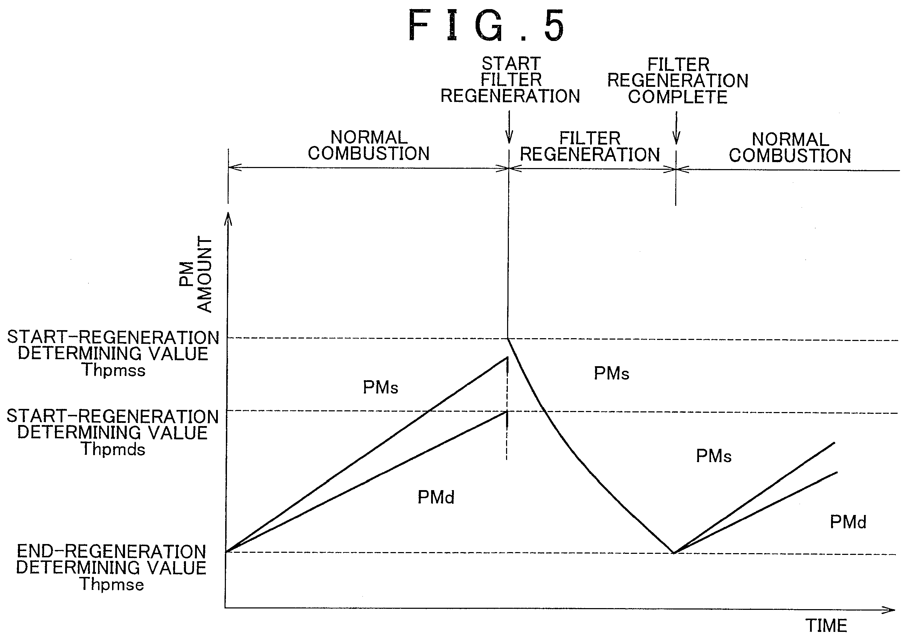

Then the estimated PM accumulated amount PMs is sequentially calculated (integrated) using the PM generated amount pme and the PM combusted amount pmc based on the operational expression PMs = PMs (last value) + pme - pmc. Here, the PMs (last value) when filter regeneration starts is a value that corresponds to a start-regeneration determining value Thpmss (see FIG. 5). Also, the PMs (last value) when starting the normal combustion mode after the filter regeneration has been completed (also including when starting the normal combustion mode the first time when the filter regeneration has not been executed) is an initial value of "0".

The map shown in FIG. 3 is a map of the values of the PM generated amount pme obtained through testing and calculation or the like, with the engine speed NE and the fuel injection quantity Qv as parameters. This map is stored in the ROM 102 of the ECU 100. Incidentally, in the map shown in FIG. 3, the PM generated amount pme is calculated by interpolation when the engine speed NE and the fuel injection quantity Qv are values that are between points on the map.

The map shown in FIG. 4 is a map of the values of the PM combusted amount pmc obtained through testing and calculation or the like, with the exhaust gas temperature Theg and the intake air amount Ga as parameters. This map is also stored in the ROM 102 of the ECU 100. Incidentally, in the map shown in FIG. 4, the PM combusted amount pmc is calculated by interpolation when the exhaust gas temperature Theg and the intake air amount Ga are values that are between points on the map.

### (2) Process for estimating the PM amount based on the differential pressure

First, in the exhaust gas control apparatus, as more and more PM accumulates on the DPF 22, that accumulated PM impedes the flow of exhaust gas, causing the exhaust gas flow resistance to increase. As the exhaust gas flow resistance increases, so too does the differential pressure ΔP between the exhaust gas pressure upstream of the DPF 22 and the exhaust gas pressure downstream of the DPF 22 in the exhaust passage 4. The differential pressure ΔP of the exhaust gas pressures in front and in back of the DPF 22 decreases as the PM accumulated on the DPF 22 is burned off (i.e., removed) and the PM accumulated amount that is accumulated on the DPF 22 decreases. In this way, there is a correlation between the differential pressure ΔP of the exhaust gas pressures in front and in back of the DPF 22 and the PM accumulated amount that is accumulated on the DPF 22. Thus, the PM accumulation amount of the DPF 22 can be estimated from the differential pressure ΔP.

Using this process (2), in this example embodiment, the amount of accumulated PM trapped in the DPF 22 (i.e., the estimated PM accumulated amount PMd) can be estimated referencing a map based on the differential pressure ΔP obtained from the output signal from the differential pressure sensor 39 provided in the exhaust passage 4 (i.e., the DPF 22).

Incidentally, the map used to calculate the estimated PM accumulated amount is a map of compatible values obtained through testing and calculation or the like, taking into account the correlation between the differential pressure ΔP of the exhaust gas pressures in front and in back of the DPF 22 and the PM accumulated amount described above. This map is stored in the ROM 102 of the ECU 100.

When the engine 1 is in the normal combustion mode, the ECU 100 estimates the estimated PM accumulated amount PMs and the estimated PM accumulated amount PMd by the processes described above, i.e., the process for estimating the PM amount based on the engine operating state and the process for estimating the PM amount based on the differential pressure. The estimated PM accumulated amount PMs and the estimated PM accumulated amount PMd increase over time. The ECU 100 determines whether the increasing estimated PM accumulated amount PMs has increased to a value at which a determination is made to start regeneration (also simply referred to as a "start-regeneration determining value"; this value corresponds to a limit PM accumulated amount) Thpmss, or the increasing estimated PM accumulated amount PMd has increased to a value at which a determination is made to start regeneration (also simply referred to as a "start-regeneration determining value"; this value corresponds to a limit PM accumulated amount) Thpmds (see FIG. 5). The ECU 100 determines that it is time to start regenerating the DPF 22 when the estimated PM accumulated amount PMs reaches the start-regeneration determining value Thpmss or the estimated PM accumulated amount PMd reaches the start-regeneration determining value Thpmds.

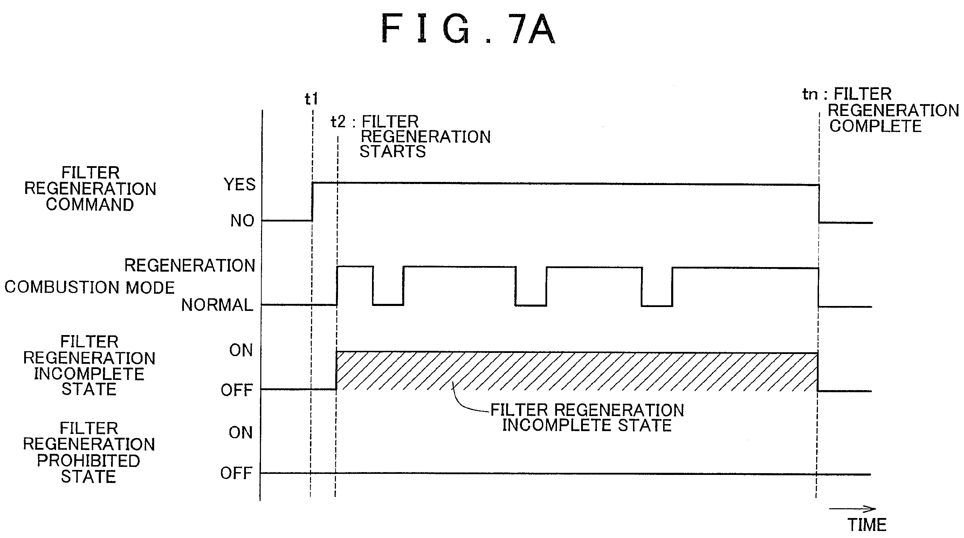

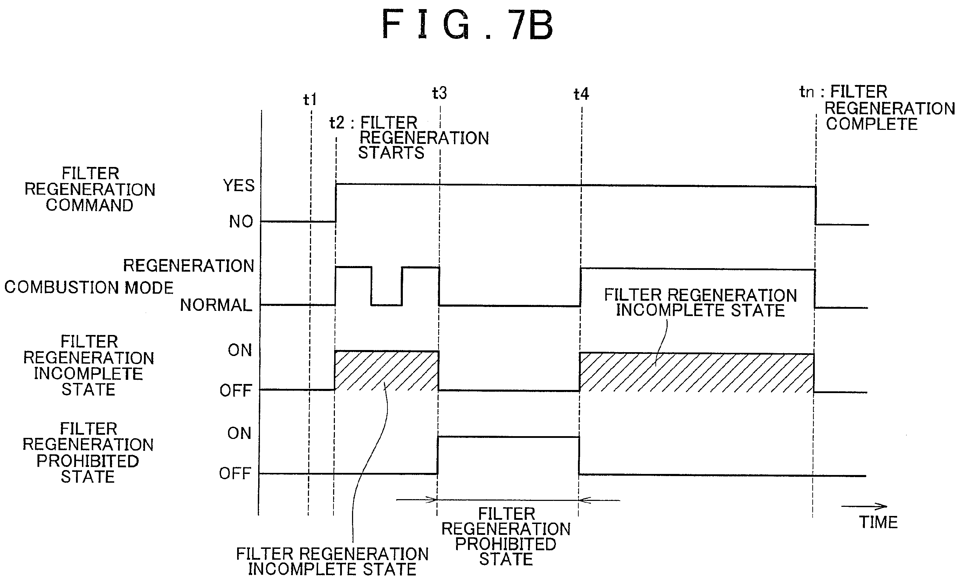

For example, as shown in FIG. 5, if the estimated PM accumulated amount PMd reaches the start-regeneration determining value Thpmds first, the ECU 100 determines that it is time to start regenerating the DPF 22 at that time, and thus generates a command for filter regeneration. Filter regeneration then starts in response to that filter regeneration command (see FIG. 7). Incidentally, in the normal combustion mode, both of the estimated PM accumulated amounts PMs and PMd are initialised (set to "0") when the estimated PM accumulated amount PMs reaches the start-regeneration determining value Thpmss or the estimated PM accumulated amount PMd reaches the start-regeneration determining value Thpmds.

During filter regeneration, a CCO temperature-increasing fuel injection (a post injection) is executed after a main fuel injection (i.e., a main injection) that is a fuel injection performed to operate the engine (i.e., an injection of fuel into the combustion chambers 1a from the injectors 2). The fuel injected from the injectors 2 by this CCO temperature-increasing fuel injection is delivered into the exhaust passage 4 and reaches the CCO 21. When the fuel component reaches the CCO 21, an oxidation reaction takes place in the exhaust gas and on the catalyst with the components such as HC and CO and the like. This oxidation reaction generates heat which increases the temperature of the CCO 21 (i.e., the exhaust gas), which in turn causes the temperature of the DPF 22 to increase. Then after performing this kind of CCO temperature-increasing fuel injection, a DPF regeneration fuel injection is executed at a predetermined timing, which burns off the PM that has accumulated on the DPF 22, thereby reducing the amount of PM accumulated on the DPF 22.

In this kind of filter regeneration, the ECU 100 selects the process for estimating the PM amount based on the engine operating state and estimates the estimated PM accumulated amount PMs [PMs = PMs (last value) + pme - pmc]. When this estimated PM accumulated amount PMs has decreased to a value at which it is determined that regeneration is to end (also referred to as an "end-regeneration determining value") thpmse (see FIG. 5), the ECU 100 determines that regeneration of the DPF 22 has been completed (i.e., filter regeneration complete) and filter regeneration ends. Incidentally, as described above, the initial value [PMs (last value)] of the estimated PM accumulated amount PMs during filter regeneration is a value that corresponds to the start-regeneration determining value Thpmss.

Here, in this example embodiment, filter regeneration is executed by the post injection, so oil dilution (i.e., fuel mixed into the engine oil) progresses with the injection of fuel from that post injection. Therefore, a limit is placed on the maximum duration of the filter regeneration. Once this maximum duration is reached, filter regeneration is prohibited (i.e., filter regeneration prohibited) until the fuel mixed into the oil sufficiently vaporises, even if there is still a command for filter regeneration. More specifically, the ECU 100 includes a timer/counter. During filter regeneration (i.e., in a specific combustion mode that affects oil dilution), the ECU 100 counts the duration of filter regeneration using the timer/counter. When the count value of the filter regeneration duration reaches a maximum duration (i.e., the duration of the post injection at which the amount of fuel diluting the oil reaches the allowable limit), the ECU 100 prohibits filter regeneration for a fixed period of time.

Incidentally, the period for which filter regeneration is prohibited is established by obtaining, through testing and calculation or the like, the period of time during which the fuel that is mixed in with the engine oil sufficiently vaporises (i.e., the time that it takes to recover from the oil dilution well enough for filter regeneration to be able to be executed), and setting a compatible value based on the results. During this filter regeneration prohibited state, it is possible to select the process for estimating the PM amount based on the differential pressure, as will be described later.

Also, even when there is a filter regeneration command, the ECU 100 will switch the combustion mode of the engine 1 from the regeneration combustion mode to the normal combustion mode when the PM combustion condition ceases to be satisfied. More specifically, when the engine has been idling or the vehicle has been running at a low speed for an extended period of time, for example, the CCO 21 does not heat up so even if a post injection is executed, the filter temperature will not increase sufficiently, making it difficult to combust PM. In this case, it is determined that the PM combustion condition is not satisfied, so the ECU 100 switches the combustion mode from the regeneration combustion mode to the normal combustion mode.

In this way, even if the combustion mode is switched from the regeneration combustion mode to the normal combustion mode during filter regeneration, the ECU 100 will determine that the filter is in the filter regeneration incomplete state until filter regeneration has been completed, so the ECU 100 will not select the process for estimating the PM amount based on the differential pressure, but instead estimate the estimated PM accumulated amount PMs using the process for estimating the PM amount based on the engine operating state. A specific example is given below.

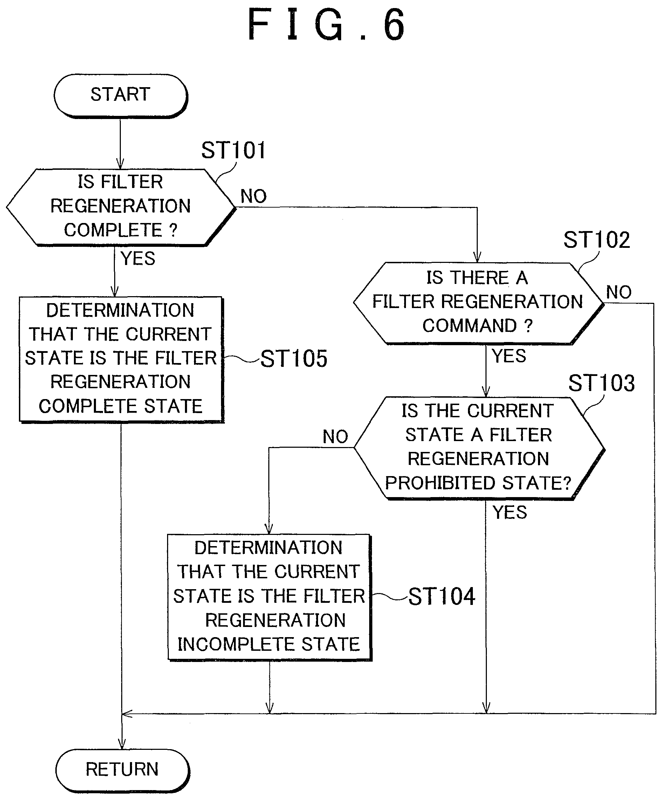

First, the routine for determining whether the filter is in the filter regeneration incomplete state will be described with reference to the flowchart in FIG. 6. The routine in FIG. 6 is executed repeatedly in predetermined cycles (such as approximately every several milliseconds to every several tens of milliseconds) in the ECU 100.

In step ST101, the ECU 100 determines whether the filter regeneration has been completed (i.e., filter regeneration complete) based on the current PM accumulated amount PMs estimated according to the process for estimating the PM amount based on the engine operating state described above. If the determination is yes, the ECU 100 determines that the current PM accumulation state of the DPF 22 is a filter regeneration complete state (step ST105). If the determination in step ST101 is no (i.e., if the filter is not in the filter regeneration complete state), the process proceeds on to step ST102.

In step ST102, the ECU 100 determines whether there is a filter regeneration command. More specifically, a filter regeneration command is generated when the estimated PM accumulated amount PMs reaches the start-regeneration determining value Thpmss or the estimated PM accumulated amount PMd reaches the start-regeneration determining value Thpmds. If this filter regeneration command generated, the process proceeds on to step ST103. Incidentally, the filter regeneration command continues (i.e., a command flag continues to be raised) until filter regeneration is complete, as shown in FIG. 7.

If the determination in step ST102 is no, the process returns.

In step ST103, the ECU 100 determines whether the current state is the filter regeneration prohibited state. If this determination is no, the ECU 100 determines that the current is the filter regeneration incomplete state (step ST104).

If the determination in step ST103 is yes (i.e., if the current state is the filter regeneration prohibited state), the process returns. That is, when the current state is the filter regeneration prohibited state, PM accumulates on the DPF 22 and the fuel that is mixed in with the engine oil vaporises (the oil recovers from being diluted) in this filter regeneration prohibited state, so the ECU 100 does not make a determination that the filter is in the filter regeneration incomplete state.

Next, the filter regeneration incomplete state will be described in detail with reference to the timing charts in FIGS. 7A and 7B.

First, as shown in FIG. 7A, when there is a filter regeneration command at time t1, filter regeneration starts in response to that regeneration command. Then at time t2 when filter regeneration starts, the filter regeneration incomplete state turns on. This filter regeneration incomplete state continues until time tn, at which time filter regeneration is complete, as long as the filter regeneration prohibited state does not turn on.

In the example shown in FIG. 7A, after filter regeneration starts (i.e., while the filter is in the filter regeneration incomplete state), the filter regeneration incomplete state continues even when the combustion mode of the engine 1 switches from the regeneration combustion mode to the normal combustion mode. Therefore, the estimated PM accumulated amount PMs is estimated using the process for estimating the PM amount based on the engine operating state. This will be described later. On the other hand, as shown in FIG. 7B, if the filter regeneration prohibited state turns on between time t2 when filter regeneration starts and time tn when filter regeneration is complete, then during this filter regeneration prohibited state (i.e., from t3 to t4), the filter regeneration incomplete state will turn off and the combustion mode will switch to the normal combustion mode such that the process for estimating the PM accumulated amount based on the differential pressure may be selected. This will also be described later.

As described above, the filter regeneration incomplete state is a state in which there is a filter regeneration command, during a period after filter regeneration starts until filter regeneration has been completed and filter regeneration is not being prohibited.

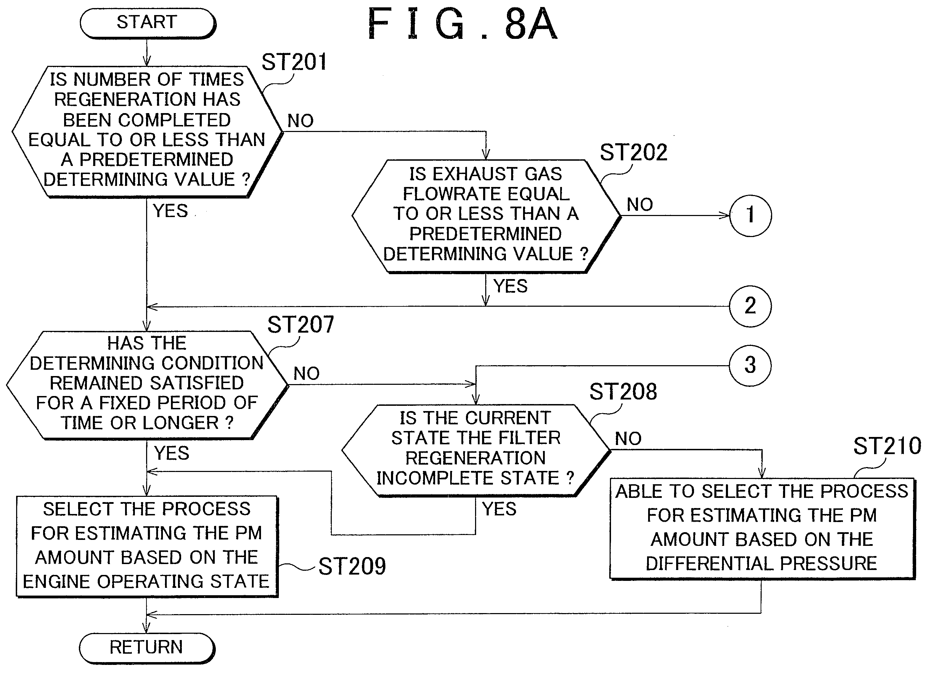

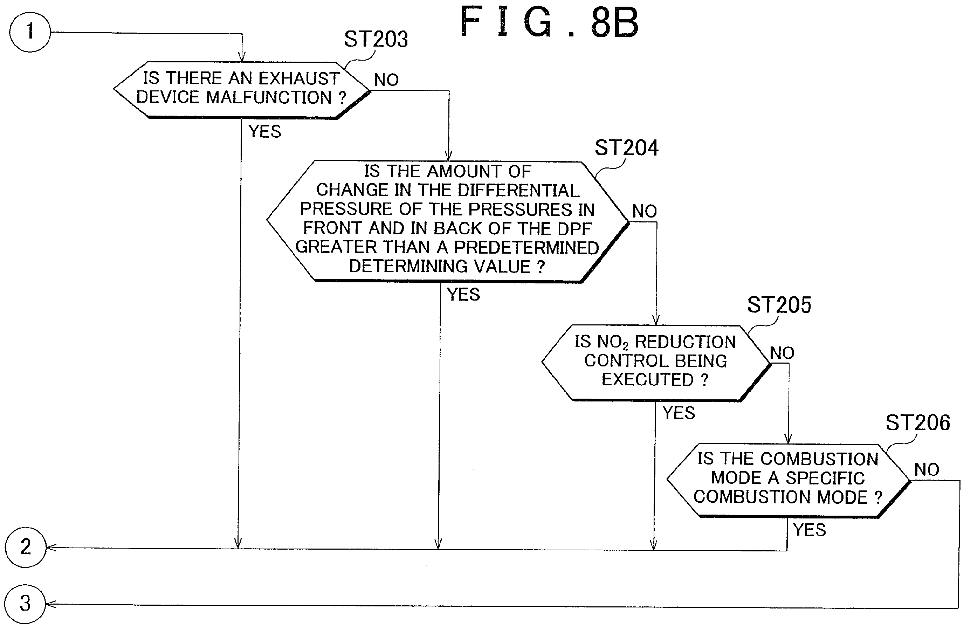

Next, an example of control for selecting the process for estimating the PM amount based on the engine operating state or the process for selecting the PM amount based on the differential pressure described above will be described with reference to the flowchart in FIG. 8A and FIG. 8B. The routine in FIG. 8A and FIG. 8B is executed repeatedly in predetermined cycles (such as approximately every several milliseconds to every several tens of milliseconds) in the ECU 100.

In step ST201, the ECU 100 determines whether the number of times the filter regeneration has been completed is equal to or less than a predetermined determining value. If the determination is yes, the process proceeds on to step ST207. If, on the other hand, the determination in step ST201 is no, the ECU 100 determines that the DPF 22 is new and the process proceeds on to step ST202. The reason for providing step ST201 is because when the DPF 22 is new, the accuracy of the process for estimating the PM amount based on the differential pressure is low, so step ST201 is provided so that that process for estimating the PM amount will not be selected.

Incidentally, the determining value used in the determination of step ST201 is set by obtaining, through testing and calculation or the like, the number of times that the accuracy of the process for estimating the PM amount based on the differential pressure falls within an allowable range (i.e., the number of times filter regeneration has been completed), and setting a compatible value based on the results.

In step ST202, the ECU 100 determines whether the exhaust gas flowrate is equal to or less than a predetermined determining value. If this determination is yes, the process proceeds on to step ST207. If, on the other hand, the determination in step ST202 is no, the process proceeds on to step ST203. The reason for providing step ST202 is because when the exhaust gas flowrate is low, the accuracy of the process for estimating the PM amount based on the differential pressure is low, so step ST202 is provided so that that process for estimating the PM amount will not be selected. Here, the exhaust gas flowrate may be calculated based on, for example, the engine speed NE that can be obtained from the output signal of the engine speed sensor 31, the fuel injection quantity Qv (i.e., a command signal), and the intake air amount Ga that can be obtained from the output signal of the airflow meter 33. Incidentally, an exhaust gas flowrate sensor may also be arranged in the exhaust passage 4 and the exhaust gas flowrate obtained from the output signal of that sensor.

The determining value used in the determination of step ST202 is set by obtaining, through testing and calculation or the like, the exhaust gas flowrate at which the accuracy of the process for estimating the PM amount based on the differential pressure falls outside of the allowable range, and setting a compatible value based on the results.

In step ST203, the ECU 100 performs a malfunction diagnosis of the exhaust devices (such as the A/F sensor 36 and the differential pressure sensor 39) and determines whether those exhaust devices are malfunctioning. If the determination in step ST203 is yes, the ECU 100 determines that the process for estimating the PM amount based on the differential pressure is unreliable and the process proceeds on to step ST207. If, on the other hand, the determination in step ST203 is no, the process proceeds on to step ST204.

In step ST204, the ECU 100 determines whether the amount of change in the differential pressure ΔP of the pressures in front and in back of the DPF 22 (i.e., the amount of change per unit time) is greater than a predetermined determining value. If this determination is yes, the process proceeds on to step ST207. If, on the other hand, the determination in step ST204 is no, the process proceeds on to step ST205.

The reason for executing step ST204 will now be described. First, the amount of change per unit time in the differential pressure ΔP from the PM accumulated on the DPF 22 stays within a certain range. However, when the accelerator is operated ON and OFF in a short period of time, the differential pressure ΔP abruptly changes in a short period of time compared with the PM accumulation. In this situation, the relationship between the estimated PM accumulated amount that is estimated based on the differential pressure ΔP and the actual PM accumulated amount becomes skewed, so the estimated PM accumulated amount is no longer reliable. Therefore, step ST204 is executed so that the process for estimating the PM amount based on the differential pressure will not be selected when the amount of change in the differential pressure ΔP of the pressures in front and in back of the DPF 22 is large.

Incidentally, the determining value used in the determination of step ST204 is set by, for example, obtaining, through testing and calculation or the like, the maximum value for the amount of change per unit time of the differential pressure ΔP from the PM accumulated on the DPF 22, and applying a value that enables a distinction to be made between a change in the differential pressure from PM accumulation and an abrupt change in the differential pressure due to some other reason, based on the results.

In step ST205, the ECU 100 determines whether the NO₂ reduction control is currently being executed. If the determination is yes, the process proceeds on to step ST207. If, on the other hand, the determination in step ST205 is no, the process proceeds on to step ST206. The reason for providing step ST205 is because when NO₂ reduction control is being executed, the holes described above (i.e., holes in the PM accumulation layer) tend to form which causes the process for estimating the PM amount based on the differential pressure to become unreliable, so step ST205 is provided so that that process for estimating the PM amount will not be selected.

In step ST206, the ECU 100 determines whether the combustion mode is a specific combustion mode (being either a combustion mode for increasing the bed temperature of the CCO 21 or a filter regeneration combustion mode). If the determination is yes, the process proceeds on to step ST207. If, on the other hand, the determination in step ST206 is no (i.e., if the combustion mode is the normal combustion mode), the process proceeds on to step ST208. Step ST206 is a step that is performed so that the process for estimating the PM amount based on the differential pressure will not be selected during filter regeneration.

Step ST207 is a step that is performed to remove noise and the like. In this step, it is determined whether the determining condition of any one of steps ST201 to ST206 has remained satisfied for a fixed period of time or longer. If the determination is yes, the ECU 100 selects the process for estimating the PM amount based on the engine operating state (step ST209), and estimates the PM accumulated amount using that selected PM amount estimation process. If, on the other hand, the determination in step ST207 is no, the process proceeds on to step ST208.

In step ST208, the ECU 100 determines whether the current state is the filter regeneration incomplete state based on the determination in FIG. 6. If the determination in step ST208 is yes, the ECU 100 selects the process for estimating the PM amount based on the engine operating state (step ST209), and estimates the PM accumulated amount using that selected PM amount estimation process.

If, on the other hand, the determination in step ST208 is no (i.e., if the current state is not the filter regeneration incomplete state), the ECU 100 is able to select the process for estimating the PM amount based on the differential pressure (step ST210), such that either the process for estimating the PM amount based on the engine operating state or the process for estimating the PM amount based on the differential pressure can be selected.

As described above, according to the control of this example embodiment, the ECU 100 determines that a period of time from after there is a command to regenerate the filter and the filter regeneration starts until the filter regeneration has been completed, and which is a period of time during which the filter regeneration is not prohibited, is a period of time during which the filter is in a filter regeneration incomplete state. While the filter is in the filter regeneration incomplete state, the ECU 100 estimates the PM accumulation amount using the process for estimating the PM amount that is based on the engine operating state and prevents the process for selecting the PM amount that is based on the differential pressure from being selected. Therefore, after filter regeneration has started in response to a filter regeneration command, the PM accumulation amount continues to be estimated using the process for estimating the PM amount based on the engine operating state even if the combustion mode switches to the normal combustion mode while the filter is being regenerated. Accordingly, the relationship between the estimated PM accumulated amount and the actual PM accumulated amount will not become skewed, thus making it is possible to accurately determine when filter regeneration has been completed. As a result, it is possible to suppress an increase in the frequency with which filter regeneration is executed, and thus suppress a reduction in fuel efficiency. Also, oil dilution from the post injection can also be suppressed.

Incidentally, in the example described above, the initial value [PMs (last value)] when calculating the estimated PM accumulated amount PMs during filter regeneration [PMs ← PMs (last value) + pme - pmc] may be a constant value or it may be variably set according to the running state of the vehicle or the operating state of the engine 1. For example, the exhaust gas temperature is higher, which facilitates regeneration of the DPF 22, when the vehicle speed is higher than when it is lower. Taking that into account, the initial value of the estimated PM accumulated amount may therefore also be set variably according to the vehicle speed. Also, the initial value of the estimated PM accumulated amount PMs during filter regeneration may also be set according to the exhaust gas flowrate, such that the initial value becomes larger as the exhaust gas flowrate decreases.

Also, in the example described above, the accuracy of the determination to end regeneration increases as the end-regeneration determining value Thpmse (see FIG. 5) that is set with for the estimated PM accumulated amount PMs during filter regeneration approaches "0". However, if the end-regeneration determining value Thpmse becomes too close to "0", the filter regeneration time increases which may lead to lower fuel efficiency. Therefore, taking this determination accuracy and fuel efficiency into account, a compatible value obtained through testing and calculation or the like is set as the end-regeneration determining value Thpmse.

In the example embodiment described above, filter regeneration is performed by the post injection after the main fuel injection, but the invention is not limited to this. For example, filter regeneration may also be performed by adding fuel from a fuel adding valve in the exhaust passage (such as in the exhaust manifold 4a) upstream of the DPF 22. Also, filter regeneration may be performed by a combination of added fuel and the post injection.

In the example embodiments described above, the DPF is used as the particulate filter, but the invention is not limited to this. That is, the invention may also be applied to an exhaust gas control apparatus that uses a DPNR catalyst.

In the example embodiment described above, an example is described in which the exhaust gas control apparatus of the invention is applied to an in-cylinder direct injection four cylinder diesel engine, but the invention is not limited to this. For example, the invention may also be applied to a diesel engine with an arbitrary number of cylinders, such as an in-cylinder direct injection six cylinder diesel engine.

Furthermore, the exhaust gas control apparatus of the example embodiment described above may also be applied to a lean-burn petrol engine in which the operating range where the engine is operated by supplying a mixture with a high air-fuel ratio (i.e., a lean atmosphere) accounts for the majority of the entire operating range. Also, the invention is not limited to being applied to an engine of a vehicle, but may also be applied to an engine used for another purpose.

While the invention has been described with reference to example embodiments thereof, it is to be understood that the invention is not limited to the described embodiments or constructions. To the contrary, the invention is intended to cover various modifications and equivalent arrangements as defined by the appended claims.

## Claims

1. An exhaust gas control apparatus of an internal combustion engine, that is provided with a filter (22) that is arranged in an exhaust passage (4) of an internal combustion engine (1) and traps particulate matter in exhaust gas, and filter regeneration controlling means (100) for estimating an accumulated amount of particulate matter (PM) accumulated on the filter (22), starting filter regeneration to remove the particulate matter (PM) accumulated on the filter (22) in response to a filter regeneration command when the estimated accumulated amount of particulate matter (PM) reaches a start-regeneration determining value, and ending the filter regeneration when the estimated accumulated amount of particulate matter decreases to an end-regeneration determining value, wherein:
the filter regeneration controlling means (100) is configured to determine that a period of time from after there is filter regeneration command and the filter regeneration starts until the filter regeneration has been completed, and which is a period of time during which the filter regeneration is not prohibited, is a period of time during which the filter is in a filter regeneration incomplete state; **characterized in that**,
when filter regeneration is not prohibited and the filter is not in the filter regeneration incomplete state, the filter regeneration controlling means (100) is able to select an estimation process for estimating the accumulated amount of particulate matter (PM) based on the engine operating state or an estimation process for estimating the accumulated amount of particulate matter (PM) based on a differential pressure of pressures in front and in back of the filter (22) and **in that**
the filter regeneration controlling means (100) is configured to estimate the accumulated amount of particulate matter (PM) accumulated on the filter (22) based on the engine operating state and to prevent an estimation of such accumulated amount based on a differential pressure of pressures in front and in back of the filter while the filter (22) is in the filter regeneration incomplete state.

2. The exhaust gas control apparatus according to claim 1, wherein when there is no command to regenerate the filter (22), the filter regeneration controlling means (100) is able to select an estimation process for estimating the accumulated amount of particulate matter (PM) based on the engine operating state or an estimation process for estimating the accumulated amount of particulate matter (PM) based on a differential pressure of pressures in front and in back of the filter (22).

3. The exhaust gas control apparatus according to claim 1 or 2, wherein a determination that the filter (22) is in the filter regeneration incomplete state is made when any one or more conditions, from among i) a condition that the number of times that the filter regeneration has been completed be greater than a predetermined determining number, ii) a condition the flowrate of exhaust gas that flows through the filter (22) be greater than a predetermined flowrate, iii) a condition that there be no malfunction in the exhaust gas control apparatus, iv) a condition that an amount of change in the differential pressure of the pressures in front and in back of the filter (22) be equal to or less than a predetermined amount, v) a condition that the exhaust gas control apparatus not be executing NO₂ reduction control, and vi) a condition that filter regeneration to remove particulate matter (PM) accumulated on the filter (22) not be being executed, are satisfied.

4. The exhaust gas control apparatus according to any one of claims 1 to 3, wherein a determination that the filter (22) is in the filter regeneration incomplete state is made when any one or more conditions, from among i) a condition that the number of times that the filter regeneration has been completed be equal to or less than a predetermined determining number, ii) a condition the flowrate of exhaust gas that flows through the filter (22) be equal to or less than a predetermined flowrate, iii) a condition that there be a malfunction in the exhaust gas control apparatus, iv) a condition that an amount of change in the differential pressure of the pressures in front and in back of the filter (22) be greater than a predetermined amount, v) a condition that the exhaust gas control apparatus be executing NO₂ reduction control, and vi) a condition that filter regeneration to remove particulate matter (PM) accumulated on the filter (22) be being executed, have not continued to be satisfied for a predetermined period of time or longer.

5. The exhaust gas control apparatus according to any one of claims 1 to 4, wherein the filter regeneration controlling means (100) estimates the accumulated amount of particulate matter (PM) accumulated on the filter (22) based on the engine operating state when any one or more conditions, from among i) a condition that the number of times that the filter regeneration has been completed be equal to or less than a predetermined determining number, ii) a condition the flowrate of exhaust gas that flows through the filter (22) be equal to or less than a predetermined flowrate, iii) a condition that there be a malfunction in the exhaust gas control apparatus, iv) a condition that an amount of change in a differential pressure of the pressures in front and in back of the filter (22) be greater than a predetermined amount, v) a condition that the exhaust gas control apparatus be executing NO₂ reduction control, and vi) a condition that filter regeneration to remove particulate matter (PM) accumulated on the filter (22) be being executed, have continued to be satisfied for a predetermined period of time or longer.

## Patentansprüche

1. Abgasregelungsvorrichtung eines Verbrennungsmotors, welche versehen ist mit einem Filter (22), der in einem Auslasskanal (4) eines Verbrennungsmotors (1) angeordnet ist und partikuläre Stoffe im Abgas zurückhält, und einem Filterregenerationsregelungsmittel (100) zum Schätzen einer akkumulierten Menge von partikulären Stoffen (PM), die sich an dem Filter (22) angesammelt haben, welches die Filterregeneration startet, um die partikulären Stoffe (PM), die sich an dem Filter (22) angesammelt haben, als Reaktion auf einen Filterregenerationsbefehl zu entfernen, wenn die geschätzte akkumulierte Menge von partikulären Stoffen (PM) einen Regenerationsstart-Bestimmungswert erreicht, und die Filterregeneration beendet, wenn die geschätzte akkumulierte Menge von partikulären Stoffen auf einen Regenerationsende-Bestimmungswert sinkt, wobei:
das Filterregenerationsregelungsmittel (100) dazu ausgebildet ist, zu bestimmen, dass ein Zeitraum ab Vorliegen eines Filterregenerationsbefehls und Start der Filterregeneration bis zur Fertigstellung der Filterregeneration, und welcher ein Zeitraum ist, in dem die Filterregeneration nicht gesperrt ist, ein Zeitraum ist, in dem sich der Filter in einem filterregenerationsunfertigen Zustand befindet; **dadurch gekennzeichnet, dass**,
wenn die Filterregeneration nicht gesperrt ist und sich der Filter nicht in dem filterregenerationsunfertigen Zustand befindet, das Filterregenerationsregelungsmittel (100) in der Lage ist, einen Schätzungsprozess zum Schätzen der akkumulierten Menge von partikulären Stoffen (PM) basierend auf dem Motorbetriebszustand oder einen Schätzungsprozess zum Schätzen der akkumulierten Menge von partikulären Stoffen (PM) basierend auf einem Differenzdruck von Druckwerten vor und hinter dem Filter (22) auszuwählen, und dadurch, dass
das Filterregenerationsregelungsmittel (100) dazu ausgebildet ist, die akkumulierte Menge von partikulären Stoffen (PM), die sich an dem Filter (22) angesammelt haben, basierend auf dem Motorbetriebszustand zu schätzen und eine Schätzung einer derartigen akkumulierten Menge basierend auf einem Differenzdruck von Druckwerten vor und hinter dem Filter zu verhindern, während sich der Filter (22) in dem filterregenerationsunfertigen Zustand befindet.

2. Abgasregelungsvorrichtung nach Anspruch 1, wobei, wenn kein Befehl, den Filter (22) zu regenerieren, vorliegt, das Filterregenerationsregelungsmittel (100) in der Lage ist, einen Schätzungsprozess zum Schätzen der akkumulierten Menge von partikulären Stoffen (PM) basierend auf dem Motorbetriebszustand oder einen Schätzungsprozess zum Schätzen der akkumulierten Menge von partikulären Stoffen (PM) basierend auf einem Differenzdruck von Druckwerten vor und hinter dem Filter (22) auszuwählen.

3. Abgasregelungsvorrichtung nach Anspruch 1 oder 2, wobei eine Bestimmung, dass sich der Filter (22) in dem filterregenerationsunfertigen Zustand befindet, erfolgt, wenn eine oder mehrere beliebige Bedingungen erfüllt werden aus: i) einer Bedingung, dass die Anzahl von Malen, wie oft die Filterregeneration fertiggestellt wurde, größer als eine vorgegebene Bestimmungsanzahl ist, ii) einer Bedingung, dass die Durchströmrate von Abgas, das durch den Filter (22) strömt, größer als eine vorgegebene Durchströmrate ist, iii) einer Bedingung, dass keine Fehlfunktion in der Abgasregelungsvorrichtung vorliegt, iv) einer Bedingung, dass ein Ausmaß der Änderung im Differenzdruck der Druckwerte vor und hinter dem Filter (22) kleiner oder gleich einem vorgegebenen Ausmaß ist, v) einer Bedingung, dass die Abgasregelungsvorrichtung keine NO₂-Reduktionsregelung durchführt, und vi) einer Bedingung, dass keine Filterregeneration durchgeführt wird, um partikuläre Stoffe (PM), die sich an dem Filter (22) angesammelt haben, zu entfernen.

4. Abgasregelungsvorrichtung nach einem beliebigen der Ansprüche 1 bis 3, wobei eine Bestimmung, dass sich der Filter (22) in dem filterregenerationsunfertigen Zustand befindet, erfolgt, wenn eine oder mehrere beliebige Bedingungen aus: i) einer Bedingung, dass die Anzahl von Malen, wie oft die Filterregeneration fertiggestellt wurde, kleiner oder gleich einer vorgegebenen Bestimmungsanzahl ist, ii) einer Bedingung, dass die Durchströmrate von Abgas, das durch den Filter (22) strömt, kleiner oder gleich einer vorgegebenen Durchströmrate ist, iii) einer Bedingung, dass eine Fehlfunktion in der Abgasregelungsvorrichtung vorliegt, iv) einer Bedingung, dass ein Ausmaß der Änderung im Differenzdruck der Druckwerte vor und hinter dem Filter (22) größer als ein vorgegebenes Ausmaß ist, v) einer Bedingung, dass die Abgasregelungsvorrichtung NO₂-Reduktionsregelung durchführt, und vi) einer Bedingung, dass Filterregeneration durchgeführt wird, um partikuläre Stoffe (PM), die sich an dem Filter (22) angesammelt haben, zu entfernen, während eines vorgegebenen Zeitraums oder länger nicht erfüllt werden.

5. Abgasregelungsvorrichtung nach einem beliebigen der Ansprüche 1 bis 4, wobei das Filterregenerationsregelungsmittel (100) die akkumulierte Menge von partikulären Stoffen (PM), die sich an dem Filter (22) angesammelt haben, basierend auf dem Motorbetriebszustand schätzt, wenn eine oder mehrere beliebige Bedingungen aus i) einer Bedingung, dass die Anzahl von Malen, wie oft die Filterregeneration fertiggestellt wurde, kleiner oder gleich einer vorgegebenen Bestimmungsanzahl ist, ii) einer Bedingung, dass die Durchströmrate von Abgas, das durch den Filter (22) strömt, kleiner oder gleich einer vorgegebenen Durchströmrate ist, iii) einer Bedingung, dass eine Fehlfunktion in der Abgasregelungsvorrichtung vorliegt, iv) einer Bedingung, dass ein Ausmaß der Änderung im Differenzdruck der Druckwerte vor und hinter dem Filter (22) größer als ein vorgegebenes Ausmaß ist, v) einer Bedingung, dass die Abgasregelungsvorrichtung NO₂-Reduktionsregelung durchführt, und vi) einer Bedingung, dass Filterregeneration durchgeführt wird, um partikuläre Stoffe (PM), die sich an dem Filter (22) angesammelt haben, zu entfernen, während eines vorgegebenen Zeitraums oder länger erfüllt werden.

## Revendications

1. Appareil de contrôle des gaz d'échappement d'un moteur à combustion interne, qui est pourvu d'un filtre (22) qui est disposé dans un passage d'échappement (4) d'un moteur à combustion interne (1) et piège de la matière en particules dans le gaz d'échappement, et des moyens de commande de régénération de filtre (100) destinés à estimer une quantité accumulée de matière en particules (PM) accumulée sur le filtre (22), qui démarrent une régénération de filtre pour enlever la matière en particules (PM) accumulée sur le filtre (22) en réponse à une commande de régénération de filtre quand la quantité accumulée estimée de matière en particules (PM) atteint une valeur de détermination de début de régénération, et qui arrêtent la régénération de filtre quand la quantité accumulée estimée de matière en particules diminue jusqu'à une valeur de détermination de fin de régénération, dans lequel :
les moyens de commande de régénération de filtre (100) sont configurés pour déterminer qu'une période depuis une commande de régénération de filtre et le début de la régénération de filtre jusqu'à ce que la régénération de filtre soit terminée, et qui est une période pendant laquelle la régénération de filtre n'est pas interdite, est une période pendant laquelle le filtre est dans un état inachevé de régénération de filtre ; **caractérisé en ce que**,
quand une régénération de filtre n'est pas interdite et le filtre n'est pas dans l'état inachevé de régénération de filtre, les moyens de commande de régénération de filtre (100) sont capables de sélectionner un processus d'estimation destiné à estimer la quantité accumulée de matière en particules (PM) sur la base de l'état de fonctionnement de moteur ou un processus d'estimation destiné à estimer la quantité accumulée de matière en particules (PM) sur la base d'une pression différentielle de pressions à l'avant et à l'arrière du filtre (22) et **en ce que**
les moyens de commande de régénération de filtre (100) sont configurés pour estimer la quantité accumulée de matière en particules (PM) accumulée sur le filtre (22) sur la base de l'état de fonctionnement de moteur et pour empêcher une estimation d'une telle valeur accumulée sur la base d'une pression différentielle de pressions à l'avant et à l'arrière du filtre alors que le filtre (22) est dans l'état inachevé de régénération de filtre.

2. Appareil de contrôle de gaz d'échappement selon la revendication 1, dans lequel, quand il n'y a pas de commande pour régénérer le filtre (22), les moyens de commande de régénération de filtre (100) sont capables de sélectionner un processus d'estimation pour estimer la quantité accumulée de matière en particules (PM) sur la base de l'état de fonctionnement de moteur ou un processus d'estimation pour estimer la quantité accumulée de matière en particules (PM) sur la base d'une pression différentielle de pressions à l'avant et à l'arrière du filtre (22).

3. Appareil de contrôle de gaz d'échappement selon la revendication 1 ou 2, dans lequel une détermination que le filtre (22) est dans l'état inachevé de régénération de filtre est faite quand une quelconque ou plusieurs conditions, parmi i) une condition que le nombre de fois que la régénération de filtre a été terminée est plus grand qu'un nombre de détermination prédéterminé, ii) une condition que le débit du gaz d'échappement qui s'écoule à travers le filtre (22) est plus grand qu'un débit prédéterminé, iii) une condition qu'il n'y a pas de défaut de fonctionnement dans l'appareil de contrôle de gaz d'échappement, iv) une condition qu'une quantité de changement de la pression différentielle des pressions à l'avant et à l'arrière du filtre (22) est égale ou inférieure à une valeur prédéterminée, v) une condition que l'appareil de contrôle de gaz d'échappement n'exécute pas une commande de réduction de NO₂, et vi) une condition que la régénération de filtre pour enlever la matière en particules (PM) accumulée sur le filtre (22) n'est pas exécutée, sont satisfaites.

4. Appareil de contrôle de gaz d'échappement selon l'une quelconque des revendications 1 à 3, dans lequel une détermination que le filtre (22) est dans l'état inachevé de régénération de filtre est faite quand une quelconque ou plusieurs conditions, parmi i) une condition que le nombre de fois que la régénération de filtre a été terminée est égale ou inférieure à un nombre de détermination prédéterminé, ii) une condition que le débit du gaz d'échappement qui s'écoule à travers le filtre (22) est égal ou inférieur à un débit prédéterminé, iii) une condition qu'il y a un défaut de fonctionnement dans l'appareil de contrôle de gaz d'échappement, iv) une condition qu'une quantité de changement de la pression différentielle de pressions à l'avant et à l'arrière du filtre (22) est plus grande qu'une valeur prédéterminée, v) une condition que l'appareil de contrôle de gaz d'échappement exécute une commande de réduction de NO₂, et vi) une condition qu'une régénération de filtre pour enlever de la matière en particules (PM) accumulée sur le filtre (22) est exécutée, n'ont pas continué à être satisfaites pendant une période prédéterminée ou plus longtemps.

5. Appareil de contrôle de gaz d'échappement selon l'une quelconque des revendications 1 à 4, dans lequel les moyens de commande de régénération de filtre (100) estiment la quantité accumulée de matière en particules (PM) accumulée sur le filtre (22) sur la base de l'état de fonctionnement de moteur quand une quelconque ou plusieurs conditions, parmi i) une condition que le nombre de fois que la régénération de filtre a été terminée est égale ou inférieure à un nombre de détermination prédéterminé, ii) une condition que le débit de gaz d'échappement qui s'écoule à travers le filtre (22) est égal ou inférieur à un débit prédéterminé, iii) une condition qu'il y a un défaut de fonctionnement dans l'appareil de contrôle de gaz d'échappement, iv) une condition qu'une quantité de changement d'une pression différentielle de pressions à l'avant et à l'arrière du filtre (22) est plus grande qu'une valeur prédéterminée, v) une condition que l'appareil de contrôle de gaz d'échappement exécute une commande de réduction de NO₂, et vi) une condition qu'une régénération de filtre pour enlever de la matière en particules (PM) accumulée sur le filtre (22) est exécutée, ont continué à être satisfaites pendant une période prédéterminée ou plus longtemps.
